# EUROPÄISCHE PATENTSCHRIFT

(11) **EP 1 067 020 B1**
(45) Veröffentlichungstag und Bekanntmachung des Hinweises auf die Patenterteilung: **03.11.2004**
(21) Anmeldenummer: 00112995.6
(22) Anmeldetag: 21.06.2000
(51) Int. Cl.: B60R 11/02, B60N 2/46

(54) **Armlehne mit integrierter Anzeigeneinrichtung**
Armrest with incorporated display
Accoudoir avec afficheur intégré

(30) Priorität: 06.07.1999 DE 19931154
(43) Veröffentlichungstag der Anmeldung: 10.01.2001
(73) Patentinhaber: Volkswagen Aktiengesellschaft, 38436 Wolfsburg (DE)
(72) Erfinder: Lilienthal, Jörg, 38518 Gifhorn (DE); Dirksen, Susanne, 38440 Wolfsburg (DE); Heimermann, Matthias, 38302 Wolfenbüttel (DE)
(74) Vertreter: Zucker, Volker, Dipl.-Ing.

(56) Entgegenhaltungen:
- EP-A- 0 409 232
- DE-A- 3 719 105
- PATENT ABSTRACTS OF JAPAN vol. 1996, no. 02, 29. Februar 1996 (1996-02-29) & JP 07 266845 A (KENWOOD CORP), 17. Oktober 1995 (1995-10-17)
- PATENT ABSTRACTS OF JAPAN vol. 017, no. 455 (M-1466), 20. August 1993 (1993-08-20) & JP 05 105002 A (ALPINE ELECTRON INC), 27. April 1993 (1993-04-27)
- PATENT ABSTRACTS OF JAPAN vol. 011, no. 318 (M-632), 16. Oktober 1987 (1987-10-16) & JP 62 101565 A (IKEDA BUSSAN CO LTD), 12. Mai 1987 (1987-05-12)
- PATENT ABSTRACTS OF JAPAN vol. 017, no. 610 (M-1508), 10. November 1993 (1993-11-10) & JP 05 185877 A (PIONEER ELECTRON CORP), 27. Juli 1993 (1993-07-27)
- PATENT ABSTRACTS OF JAPAN vol. 018, no. 453 (M-1662), 24. August 1994 (1994-08-24) & JP 06 144084 A (MAZDA MOTOR CORP), 24. Mai 1994 (1994-05-24)

## Beschreibung

Die Erfindung betrifft eine Armlehne mit integrierter Anzeigeneinrichtung gemäß dem Oberbegriff des Patentanspruchs 1.

Es ist bekannt, die Funktion von Kraftfahrzeugen durch den Einbau von EDV-Anlagen, Fernseh-Videogeräten oder Vorrichtungen zur Einstellung von Fahrzeugkomponenten zu erweitern. Aufgrund des begrenzten Bauraumes eines Kraftfahrzeuges stellt sich hier das Problem, diese Geräte möglichst platzsparend und doch ausreichend zugänglich in das Kraftfahrzeug zu integrieren.

Aus der DE 197 54 224 ist ein Bildschirmarbeitsplatz in einem Kraftfahrzeug bekannt, wobei der Bildschirmarbeitsplatz wenigstens eine Recheneinheit, eine Tastatur und einen flachen, klappbaren Bildschirm umfaßt und im Fahrzeug eine klappbare Armlehne enthalten ist, die von einer etwa waagerechten Gebrauchsstellung in eine etwa senkrechte Nichtgebrauchsstellung wegklappbar ist, wobei der Bildschirm an der Armlehne derart klappbar befestigt ist, daß dieser einerseits in der Gebrauchsstellung der Armlehne in eine Arbeitsposition in den Sichtbereich eines Benutzers aufklappbar ist und andererseits in eine Ruheposition auf der Oberseite oder eine entsprechende Aussparung an der Oberseite der Armlehne klappbar ist und in dieser Ruheposition zusammen mit der Armlehne in deren Nichtgebrauchsstellung wegklappbar ist. Nachteilig an der bekannten Anordnung ist dessen komplizierte Klapp- und Schwenkvorrichtung.

Aus der DE 90 11 379 U1 ist eine Armlehne, insbesondere Mittelarmlehne für die Rücksitze von Kraftfahrzeugen bekannt, in die ein Fernseh-Videogerät herausschiebbar integriert ist. Dazu ist das Fernseh-Videogerät in einem in die Armlehne eingebauten Gehäuse mit einem das Gerät aufnehmenden, mittels eines Elektromotors ausfahrbaren Boden untergebracht. Zum Ein- und Ausschalten des Motors sind in den beiden Endpositionen des ausfahrbaren Bodens Endschalter angeordnet. Die vordere Stirnwand der Armlehne ist durch eine schwenkbare Klappe verschlossen. Durch Betätigung eines Schalters wird diese vordere Klappe automatisch geöffnet und der Motor schiebt den Boden mit dem Gerät aus der Armlehne, bis die Endposition erreicht ist. In der ausgefahrenen Position befindet sich dann der Bildschirm im wesentlichen parallel zu der Oberseite der Armlehne. Nachteilig an der bekannten Vorrichtung ist die Lage des Bildschirms, die eine verkrampfte Körperhaltung beim Betrachter erzwingt.

Aus der DE 37 19 105 A1 ist eine Armlehne gemäß dem Oberbegriff der Anspruchs 1 bekannt, wobei für die Wiedergabe von Video-Signalen ein Monitor vorgesehen ist, der aus dem vorderen Ende der Mittelarmstütze ausfahrbar ist und den der Sitzbenutzer manuell in die ihm genehme Lage schwenken kann.

Aus dem Patent Abstracts of Japan vol. 017, no. 610 (M-1508), JP 05 18 58 77 A ist eine Anzeigeeinrichtung für ein Fernsehgerät in einem Kraftfahrzeug bekannt, das in der Konsole des Kraftfahrzeuges angeordnet ist. Mittels eines Elektromotors ist die Anzeigeeinrichtung linear herausfahrbar und kann verschwenkt werden, wobei die Verschwenkung bereits während der Linearbewegung vorgenommen wird.

Der Erfindung liegt daher das technische Problem zugrunde, eine Anzeigeeinrichtung für EDV-Anlagen, Kraftfahrzeug-Menüsteuerungen oder Videoendgeräte derart in eine Armlehne zu integrieren, dass diese einfach zugänglich und gut positioniert in Gebrauchsstellung für den Betrachter ist.

Die Lösung des technischen Problems ergibt sich durch die Merkmale des Patentanspruchs 1. Weiterer vorteilhafte Ausgestaltungen der Erfindung ergeben sich aus den Unteransprüchen.

Bei der erfindungsgemäßen Ausbildung der Anzeigeeinrichtung ragt ein Teil der Anzeigeeinrichtung im eingeschobenen Zustand aus der Armlehne heraus, alternativ kann dieser erste Betriebszustand realisiert werden, in dem die Anzeigeeinrichtung nur partiell ausgefahren wird. Auf diesem Teil ist ein Grundmenü für häufig vorzunehmende Einstellungen, wie beispielsweise Radio oder Klimaanlage, darstellbar, so dass für diese Einstellungen nicht stets die gesamte Anzeigeeinrichtung herausgefahren werden muss.

In einer bevorzugten Ausführungsform ist das Schaltelement zur Betätigung des Elektromotors auf der Oberseite der ausgeklappten Armlehne angeordnet, wo diese mit einer klappbaren oder verschiebbaren Abdeckung ausgebildet ist. Dadurch ist das Schaltelement einerseits gut zugänglich und andererseits wird eine wesentliche Betätigung des Elektromotors vermieden, so dass auch eine herkömmliche Nutzung der Armlehne gewährleistet ist. Die Bedienelemente für diese Grundmenüs werden ebenfalls vorzugsweise stationär auf der Armlehne angeordnet.

Zur verbesserten Zuordnung dieser Bedienelemente zu den dargestellten Grundmenüs ist die Stirnfläche der Armlehne mit eine Schräge ausgebildet, auf der die Bedienelemente angeordnet sind, so daß diese unmittelbar in Bereich des Teils der Anzeigeeinrichtung liegen, der die Grundmenüs darstellt.

Um die herkömmlich Nutzung der Armlehne zu gewährleisten, können diese Bedienelemente ebenfalls mit einer klapp- oder verschiebbaren Abdeckung ausgebildet sein, um eine versehentliche Bedienung des Grundmenüs zu verhindern.

In einer weiteren bevorzugten Ausführungsform wird das Grundmenü bei einer Bewegung der Anzeigeeinrichtung derart bewegt, daß das Grundmenü relativ zur Armlehne und damit zu den stationär angeordneten Bedienelementen in gleicher Position verbliebt, so daß die Zuordnung von Grundmenü und Bedienelementen erhalten bleibt.

Vorzugsweise ist die Anzeigeeinrichtung als Touch-Screen ausgebildet, der gegebenenfalls noch zusätzlich diskrete Bedienelemente zugeordnet sind, die im herausgefahrenen Zustand für einen Nutzer zugänglich sind. Weiter kann zusätzlich an der Anzeigeeinrichtung eine Schnittstelle, vorzugsweise für eine Infrarot-Datenübertragung, für eine Tastatur vorgesehen sein.

Die Erfindung kann nachfolgend anhand eines bevorzugten Ausführungsbeispiels näher erläutert. Die Fig. zeigen:
- Fig. 1: eine Perspektivdarstellung einer Rückbank mit eingeklappter Armlehne;
- Fig. 2: eine Perspektivdarstellung der Rückbank mit ausgeklappter Armlehne,
- Fig. 3: eine Perspektivdarstellung auf die ausgefahrene Anzeigeeinrichtung aus dem Blickwinkel des Kraftfahrzeugführers und
- Fig. 4: eine Perspektivdarstellung auf die ausgefahrene Anzeigeeinrichtung aus dem Blickwinkel eines Rückinsassen.

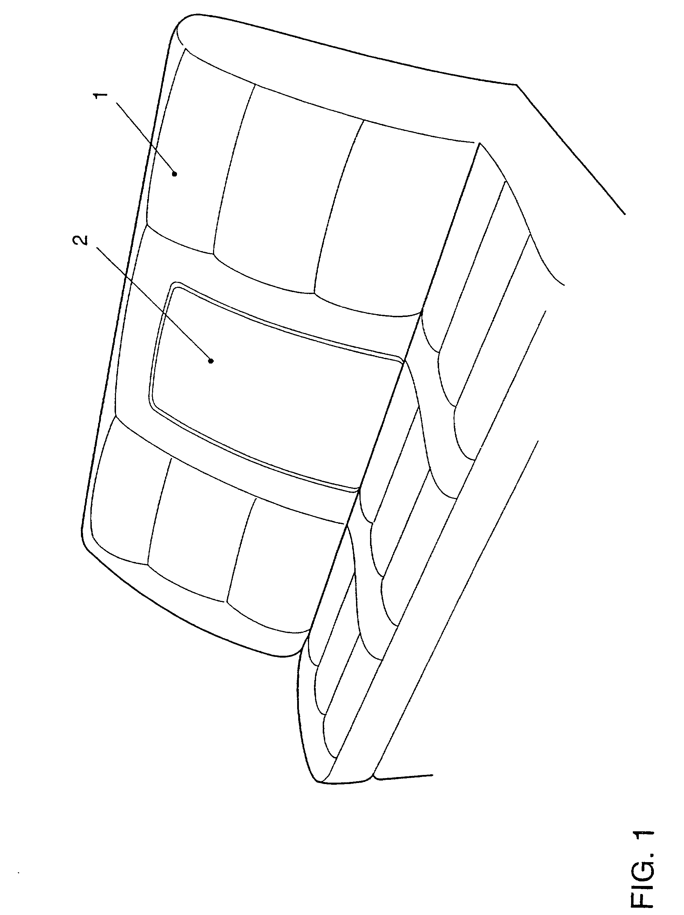

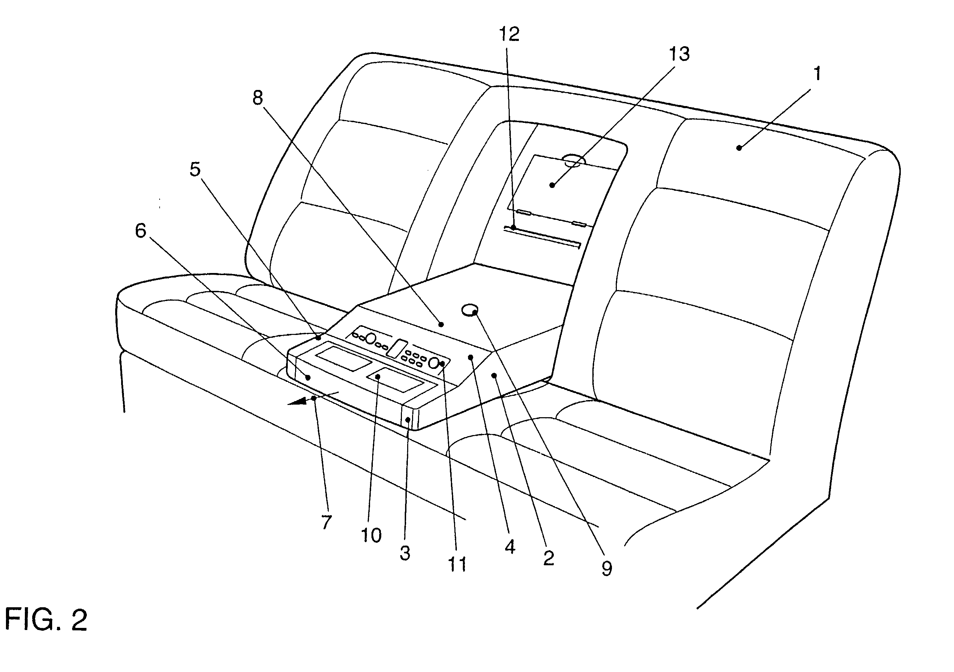

In der Fig. 1 ist eine Rückbank 1 mit einer hochgeklappten Armlehne 2 dargestellt. Die Armlehne 2 ist vollständig in die Rückbank 1 integriert, so daß sich ein geschlossener ästhetischer Gesamteindruck ergibt. Wird nun die Armlehne 2 für die konventionelle Armlehnenfunktion benötigt oder soll eine Anzeigeeinrichtung benutzt werden, so wird die Armlehne 2 wie herkömmlich aus der Rückbank 1 herausgeklappt, was in Fig. 2 dargestellt ist.

Die Armlehne 2 ist im wesentlichen quaderförmig ausgebildet. Im Bereich der Stirnfläche 3 ist die Armlehne 2 mit der Schräge 4 ausgebildet, die in eine Stufe 5 bis zur Stirnfläche 3 übergeht. In der Armlehne 2 ist eine Anzeigeeinrichtung 6 integriert, von der ein Teil in der Stufe 5 bis zur Stirnfläche 3 angeordnet ist. Über einen nicht dargestellten Elektromotor ist die Anzeigeeinrichtung 6 in Richtung des Pfeils 7 bewegbar. Auf der Oberfläche 8 der Armlehne 2 ist ein Schaltelement 9 zur Ansteuerung der Elektromotors angeordnet. Das Schaltelement 9 kann dabei entweder in der Oberfläche 8 versenkt oder erhaben ausgebildet sein. Auf dem Teil der Anzeigeeinrichtung 6, der in diesem Zustand sichtbar ist, ist ein Grundmenü 10 dargestellt, auf dem beispielsweise der aktuell eingestellt Radiosender und die durch die Klimaanlage eingestellt Fahrzeugtemperatur dargestellt sind. Auf der Schräge 4 sind die zur Bedienung des Grundmenüs 10 notwendigen Bedienelemente 11 angeordnet. Um nun eine versehentliche Betätigung des Schaltelements 9 und/oder der Bedienelemente 11 zu verhindern, falls nur die Armlehnenfunktion gewünscht wird, können das Schaltelement 9 und/oder die Bedienelemente 11 mit einer klapp- oder verschiebbaren Abdeckung ausgebildet sein. Zusätzlich kann in der Nische der Rückbank 1 ein DVD-Wechsler 12 und ein CD/DVD-Archiv 13 angeordnet sein.

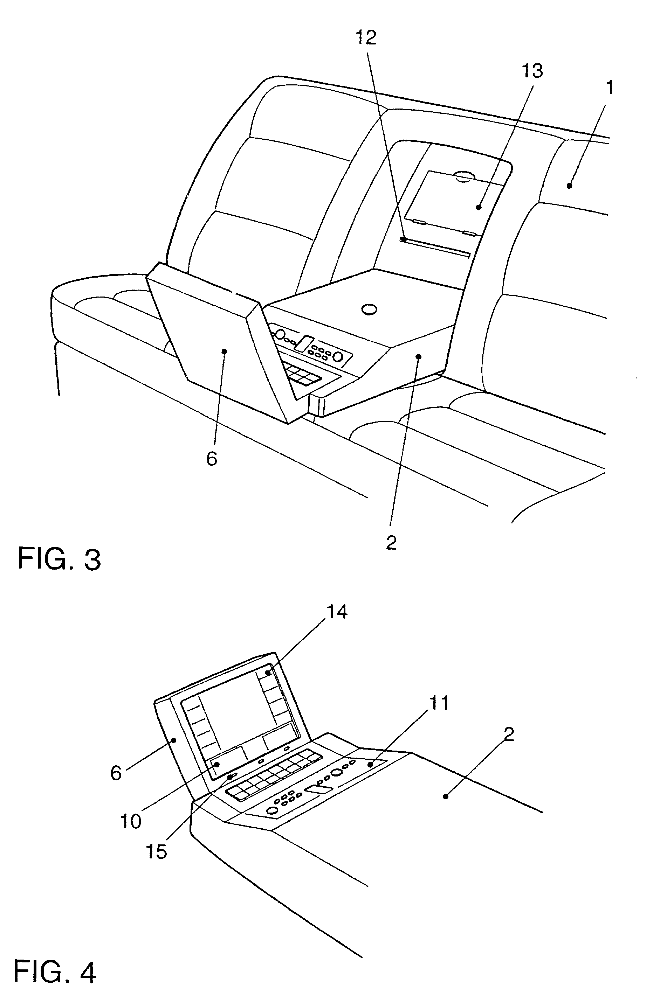

Werden nun zusätzliche Menüfunktionen benötigt oder soll die Anzeigeeinrichtung 6 als Display bzw. Monitor für eine EDV-Anlage oder ein Fernseh-Videogerät benutzt werden, so wird durch Betätigung des Schaltelementes 9 die Anzeigeeinrichtung 6 herausgefahren. Ist dann die Anzeigeeinrichtung 6 vollständig ausgefahren, so wird diese automatisch oder manuell nach oben geklappt. Diese Endstellung ist in den Fig. 3 und 4 dargestellt.

Bei der Bewegung der Anzeigeeinrichtung 6 aus der Armlehne 2 bewegt sich das Grundmenü 10 nach unten, so daß die Zuordnung zu den Bedienelementen 11 erhalten bleibt. Die Anzeigeeinrichtung 6 ist als Touch-Screen ausgebildet, so daß mindestens ein Teil der Menüsteuerung über berührungsempfindliche Schaltflächen 14 vorgenommen werden kann. Weiter sind zusätzliche diskrete Bedienelemente 15 vorgesehen, die beispielsweise als Drehregler, Drucktasten oder Wippschalter ausgebildet sind, die im unteren Bereich der Anzeigeeinrichtung 6 angeordnet sind. Im unteren Bereich der Stufe 5 können darüber hinaus weitere Bedienelemente oder ein CD-Player angeordnet sein. Da die Bedienelemente 15 erhaben sind, sind an den Positionen der Bedienelemente 15 im Inneren der Armlehne in Längsrichtung sich erstreckende Nuten vorhanden, in denen die Bedienelemente 15 bei der Bewegung der Anzeigeeinrichtung 6 geführt werden

## Patentansprüche

1. Armlehne, insbesondere Mittelarmlehne eines Fahrzeugrücksitzes, mit integrierter Anzeigeeinrichtung, die aus der Stirnseite der Armlehne herausfahrbar ist und in der ausgefahrenen Endposition manuell oder automatisch klappbar ausgebildet ist,
**dadurch gekennzeichnet, dass**
die Anzeigeeinrichtung (6) mittels eines Elektromotors aus der Armlehne (2) herausfahrbar ist,
die Anzeigeeinrichtung (6) zwei unterschiedliche Betriebszustände aufweist, wobei in einem ersten Betriebszustand nur ein Teil der Anzeigeeinrichtung (6) aus der Armlehne ragt, auf dem ein Grundmenü (10) zur Einstellung von Fahrzeugkomponenten darstellbar ist, und
in einem zweiten Betriebszustand die Anzeigeeinrichtung (6) vollständig aus der Armlehne (2) in die Endposition herausgeschoben ist,
wobei die Anzeigeeinrichtung (6) entweder vollständig in der Armlehne (2) integriert ist und mittels des Elektromotors in den ersten Betriebszustand bewegbar ist oder der Teil der Anzeigeeinrichtung (6) für den ersten Betriebszustand im eingefahrenen Zustand aus der Armlehne (2) herausragt.

2. Armlehne nach Anspruch 1,
**dadurch gekennzeichnet, dass**
auf der Oberseite (8) der Armlehne (2) mindestens ein Schaltelement (9) zur Betätigung des Elektromotors angeordnet ist.

3. Armlehne nach Anspruch 1 oder 2,
**dadurch gekennzeichnet, dass**
die Bedienelemente (11) für die Grundmenüs (10) auf der Armlehne (2) angeordnet sind.

4. Armlehne nach einem der vorangegangenen Ansprüche,
**dadurch gekennzeichnet, dass**
die Stirnfläche (3) der Armlehne (2) mit einer Schräge (4) ausgebildet ist.

5. Armlehne nach Anspruch 4,
**dadurch gekennzeichnet, dass**
die Bedienelemente (11) für die Grundmenüs (10) auf der Schräge (4) angeordnet sind.

6. Armlehne nach einem der Ansprüche 2 bis 5,
**dadurch gekennzeichnet, dass**
die Bedienelemente (11) und/oder das Schaltelement (9) mit einer klapp- oder verschiebbaren Abdeckung ausgebildet sind.

7. Armlehne nach einem der vorangegangenen Ansprüche,
**dadurch gekennzeichnet, dass**
die Anzeigeeinrichtung (6) als Touch-Screen ausgebildet ist.

8. Armlehne nach einem der vorangegangenen Ansprüche,
**dadurch gekennzeichnet, dass**
unterhalb der Anzeigeeinrichtung (6) weitere Bedienelemente (15) angeordnet sind.

9. Armlehne nach einem der vorangegangenen Ansprüche,
**dadurch gekennzeichnet, dass**
die Anzeigeeinrichtung (6) mit einer Schnittstelle für eine Tastatur ausgebildet ist.

10. Armlehne nach einem der Ansprüche 3 bis 9,
**dadurch gekennzeichnet, dass**
das Grundmenü (10) derart bei der Bewegung der Anzeigeeinrichtung (6) bewegbar ist, dass dies relativ zur Armlehne (2) annähernd in gleicher Position verbleibt.

## Claims

1. Armrest, in particular central armrest of a rear seat of a vehicle, having an integrated display device which can be extended out of the end side of the armrest and is designed, in the extended end position, in a manner such that it can be folded manually or automatically,
**characterized in that**
the display device (6) can be extended out of the armrest (2) by means of an electric motor,
the display device (6) has two different operating states, with, in a first operating state, only a part of the display device (6) protruding out of the armrest, on which a basic menu (10) for setting vehicle components can be displayed, and,
in a second operating state, the display device (6) having been slid completely out of the armrest (2) into the end position,
the display device (6) either being integrated completely in the armrest (2) and being movable into the first operating state by means of the electric motor, or, in the retracted state, the part of the display device (6) for the first operating state protruding out of the armrest (2).

2. Armrest according to Claim 1,
**characterized in that**
at least one switching element (9) for actuating the electric motor is arranged on the upper side (8) of the armrest (2).

3. Armrest according to Claim 1 or 2, **characterized in that**
the operating elements (11) for the basic menus (10) are arranged on the armrest (2).

4. Armrest according to one of the preceding claims,
**characterized in that**
the end surface (3) of the armrest (2) is designed with a slope (4).

5. Armrest according to Claim 4, **characterized in that**
the operating elements (11) for the basic menus (10) are arranged on the slope (4).

6. Armrest according to one of Claims 2 to 5,
**characterized in that**
the operating elements (11) and/or the switching element (9) are designed with a foldable or displaceable covering.

7. Armrest according to one of the preceding claims,
**characterized in that**
the display device (6) is designed as a touch screen.

8. Armrest according to one of the preceding claims,
**characterized in that**
further operating elements (15) are arranged below the display device (6).

9. Armrest according to one of the preceding claims,
**characterized in that**
the display device (6) is designed with an interface for a keyboard.

10. Armrest according to one of Claims 3 to 9,
**characterized in that**
the basic menu (10) can be moved, during the movement of the display device (6), in such a manner that it remains approximately in the same position relative to the armrest (2).

## Revendications

1. Accoudoir, notamment accoudoir central d'un siège arrière de véhicule, avec dispositif d'affichage intégré qui peut être sorti hors du côté frontal de l'accoudoir et qui est configuré pour pouvoir être rabattu manuellement ou automatiquement en position finale sortie, **caractérisé en ce que** le dispositif d'affichage (6) peut être sorti de l'accoudoir (2) à l'aide d'un moteur électrique, le dispositif d'affichage (6) présente deux états de fonctionnement différents, seule une partie du dispositif d'affichage (6) dépassant de l'accoudoir dans un premier état de fonctionnement, partie sur laquelle peut être représenté un menu de base (10) pour régler des composants du véhicule, et dans un deuxième état de fonctionnement le dispositif d'affichage (6) est complètement sorti de l'accoudoir (2) en position finale, le dispositif d'affichage (6) étant soit complètement intégré dans l'accoudoir (2) et pouvant être amené dans le premier état de fonctionnement au moyen du moteur électrique, soit la partie du dispositif d'affichage (6) destinée au premier état de fonctionnement dépasse de l'accoudoir (2) en position rentrée.

2. Accoudoir selon la revendication 1, **caractérisé en ce qu'**au moins un élément de commutation (9) destiné à commander le moteur électrique est disposé sur le dessus (8) de l'accoudoir (2).

3. Accoudoir selon la revendication 1 ou 2, **caractérisé en ce que** les éléments de commande (11) pour les menus de base (10) sont disposés sur l'accoudoir (2).

4. Accoudoir selon l'une des revendications précédentes, **caractérisé en ce que** la face frontale (3) de l'accoudoir (2) est configurée avec un biseau (4).

5. Accoudoir selon la revendication 4, **caractérisé en ce que** les éléments de commande (11) pour les menus de base (10) sont disposés sur le biseau (4).

6. Accoudoir selon l'une des revendications 2 à 5, **caractérisé en ce que** les éléments de commande (11) et/ou l'élément de commutation (9) sont munis d'un couvercle rabattable ou coulissant.

7. Accoudoir selon l'une des revendications précédentes, **caractérisé en ce que** le dispositif d'affichage (6) est réalisé sous la forme d'un écran tactile.

8. Accoudoir selon l'une des revendications précédentes, **caractérisé en ce que** d'autres éléments de commande (15) sont disposés sous le dispositif d'affichage (6).

9. Accoudoir selon l'une des revendications précédentes, **caractérisé en ce que** le dispositif d'affichage (6) est réalisé avec une interface pour un clavier.

10. Accoudoir selon l'une des revendications 3 à 9, **caractérisé en ce que** le menu de base (10) peut se déplacer lors du déplacement du dispositif d'affichage (6) de manière à rester approximativement dans la même position par rapport à l'accoudoir (2).
